# EUROPEAN PATENT SPECIFICATION

(11) **EP 0 485 242 B1**
(45) Date of publication and mention of the grant of the patent: **26.02.1997**
(21) Application number: 91310396.6
(22) Date of filing: 11.11.1991
(51) Int. Cl.: G02F 1/1335, G02F 1/1343

(54) **Liquid crystal display apparatus**
Flüssigkristall-Anzeigevorrichtung
Dispositif d'affichage à cristal liquide

(30) Priority: 09.11.1990 JP 305012/90
(43) Date of publication of application: 13.05.1992
(73) Proprietor: SHARP KABUSHIKI KAISHA, Osaka 545 (JP)
(72) Inventor: Shioji, Mitsuaki, Nara-shi, Nara-ken (JP); Ito, Kunihiko, Yamatokoriyama-shi, Nara-ken (JP); Fukutani, Hiroshi, Nara-shi, Nara-ken (JP); Akimoto, Kazuhiko, Nara-shi, Nara-ken (JP)
(74) Representative: Brown, Kenneth Richard

(56) References cited:
- EP-A- 0 179 915
- WORLD PATENTS INDEX LATEST Week 5190, Derwent Publications Ltd., London, GB; AN 90-379496 & JP-A-2 273 722
- PATENT ABSTRACTS OF JAPAN vol. 13, no. 353 (P-913)8 August 1989 & JP-A-1 113 725
- PATENT ABSTRACTS OF JAPAN vol. 13, no. 353 (P-913)8 August 1989 & JP-A-1 113 726

## Description

### BACKGROUND OF THE INVENTION

The present invention relates to a liquid crystal display apparatus.

Generally, in a liquid crystal display apparatus, overlap portions which are the opposing portions having the liquid crystal layer sandwiched therebetween realize display patterns. SEG side transparent electrodes and COM side transparent electrodes are respectively provided on a pair of transparent substrates provided oppositely with a liquid crystal layer held therebetween. The SEG side transparent and COM side transparent electrodes are composed of the above described overlap portions and a non-opposing portion (hereinafter referred to as a "mantle portion"). When the liquid crystal display apparatus is of normally white construction, the display patterns become whitish when a voltage is not applied to the SEG side transparent electrodes and the COM side transparent electrodes, whereas the display patterns become blackish when a voltage is applied to the SEG side transparent electrodes and the COM side transparent electrodes. In the case of such normally white display, the display of the liquid crystal layer portion opposite the mantle portion is normally whitish regardless of the application of voltage. In the case of the normally white display, the contrast of the display pattern is high, while the visually recognizable angle of viewing of the display pattern is narrow. When the liquid crystal display apparatus is of normally black construction, the display patterns become blackish when the voltage is not applied to the SEG side transparent electrodes and the COM side transparent electrodes, whereas the display patterns become whitish when the voltage is applied to the SEG side transparent electrodes and the COM side transparent electrodes. In the case of such normally black display, the display of the liquid crystal layer portion opposite to the mantle portion normally remains blackish regardless of the application of voltage. In the case of the normally black display, the contrast of the display pattern is low, while the visually recognizable angle of viewing of the display pattern is wider.

Conventionally the liquid crystal display apparatus cannot make the background of the display patterns blackish, because the display of the mantle portion normally remains whitish in the case of normally white display with the contrast of the display pattern being high. Also, the background of the display patterns cannot be made whitish, because the display of the mantle portion normally remains blackish in the case of normally black display with the viewing angle for visually recognizing the display patterns being wide.

### SUMMARY OF THE INVENTION

Accordingly, the present invention aims to provide an improved liquid crystal display apparatus.

The present invention, as defined by claim 1, provides a liquid crystal display device comprising a pair of substrates sandwiching a liquid crystal layer, one of the substrates having a common electrode, and the other of the substrates having a light shielding member of a regular lattice pattern extending over the whole display area of the device, said other substrate further having display electrodes and background electrodes, wherein the display electrodes are connected to signal electrodes disposed on and shielded by the light shielding member.

The sub-claims 2 to 6 are directed to embodiments of the invention.

### BRIEF DESCRIPTION OF THE DRAWINGS

Fig. 1 is a plan view of one embodiment of the present invention which is not provided with color filters;
Fig. 2 is a plan view of one embodiment of the present invention which is provided with color filters;
Fig. 3 is a sectional view of the embodiment of Fig. 2;
Fig. 4 is an essential enlargement plan view of the embodiment of Fig. 2;
Fig. 5 is a section through one embodiment of the present invention showing width-thick and width-narrow masks provided for shielding; and
Fig. 6 is a plan view of the embodiment of Fig. 5.

### DETAILED DESCRIPTION OF THE EMBODIMENTS

In the description and drawings like parts are designated by like reference numerals throughout.

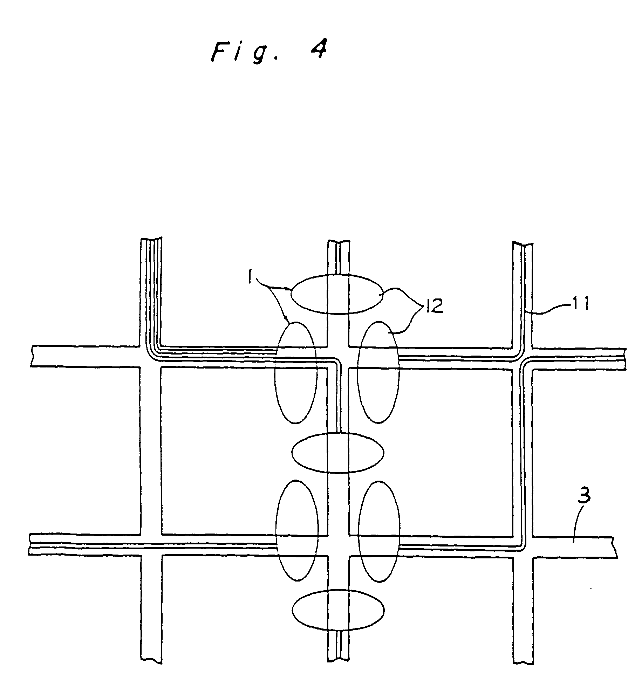

Fig. 3 is a sectional view of one embodiment of a liquid crystal display device of the present invention. The device has a translucent substrate 5 on the SEG side and a translucent substrate 6 on the COM side which substrates are disposed oppositely with respect to a liquid crystal layer 8 sandwiched therebetween. An orientation membrane 7 for setting the initial orientation condition of the liquid crystal layer 8 is provided on the surface of each of the substrates 5, 6. The substrate 5 on the SEG side has formed thereon a plurality of filters 2 different in color, stripe masks 3 as light shielding members, and transparent conductive membranes 1. The substrate 6 on the COM side has formed thereon a transparent conductive membrane 9. As shown in Fig. 2, the stripe masks 3 are provided longitudinally and latitudinally throughout the whole face of the substrate 5 on its side adjacent to the liquid crystal layer. The color filters 2 are provided in a stripe shape in uniform pitches on the face of the substrate 5 on its side adjacent to the liquid crystal layer. The stripe masks 3 are composed of width-narrow masks 32 provided longitudinally and latitudinally among the adjacent color filters 2, having a pitch the same as the pitch of the color filters 2, and width-thick masks 31 provided longitudinally and latitudinally having a pitch which is an integral multiple of the pitch of the color filters 2 and having a width which is an integral multiple of the pitch of the color filters 2. As shown in Fig. 4, the transparent conductive membrane 1 on the SEG side is composed of opposite portions (display electrodes) 12 forming display patterns in opposition to the transparent conductive membrane 9 on the COM side, and mantle portions 11, which are the non-opposite portion, not opposite to the transparent conductive membrane 9 on the COM side. The mantle portions 11 are overlapped on the stripe masks 3 so as not to protrude from the width-thick masks 31 of the stripe masks 3. Assuming that the width of the mantle portion 11 is W, and the overlapped position shift width between the masks 31 and the mantle portions 11 is X, then the width of the width-thick mask 31 is required to be W + 2 x X or more. The pitch of the width-thick masks 31 is required to be made smaller as the number of mantle portions 11 is increased.

The liquid crystal display device is adapted to color-display the display patterns through the variation of the orientation condition of the liquid crystal layer 8 by the application of a voltage between the transparent conductive membrane 1 on the SEG side and the transparent conductive membrane 9 on the COM side. The mantle portion 11 is narrower than the width-thick mask 31 of the stripe mask 3 and is adapted not to protrude from the width-thick mask 31, so that the normal white display of the liquid crystal display of the liquid crystal layer 8 opposite to the mantle portion 11 is covered by the width-thick masks 31 in the case of the normally white display. The patterns for background use surrounding the display pattern are provided so as to normally put the background patterns in the ON condition, so that the background of the display patterns may be made blackish. In the case of the normally white display with the contrast of the display pattern being high, the background of the display patterns may be made blackish. The normal black display of the liquid crystal layer 8 opposite to the mantle portion 11 is covered by the width-thick masks 31 in the case of the normally black display. The patterns for background use surrounding the display pattern are provided so as to normally put the background patterns in the ON condition, so that the background of the display patterns becomes whitish except for the portions of the stripe masks 3. The stripe masks 3 are composed of width-narrow masks 32 and width-thick masks 31. As the width-narrow masks 32 and the width-thick masks 31 respectively have equal pitches so as to effect longitudinal and latitudinal extensions, the existence of the stripe masks 3 with respect to the above described white background is not conspicuous. In the case of the normally black display with the angle of viewing where the display patterns can be visually recognizable, the background of the display patterns can be made whitish.

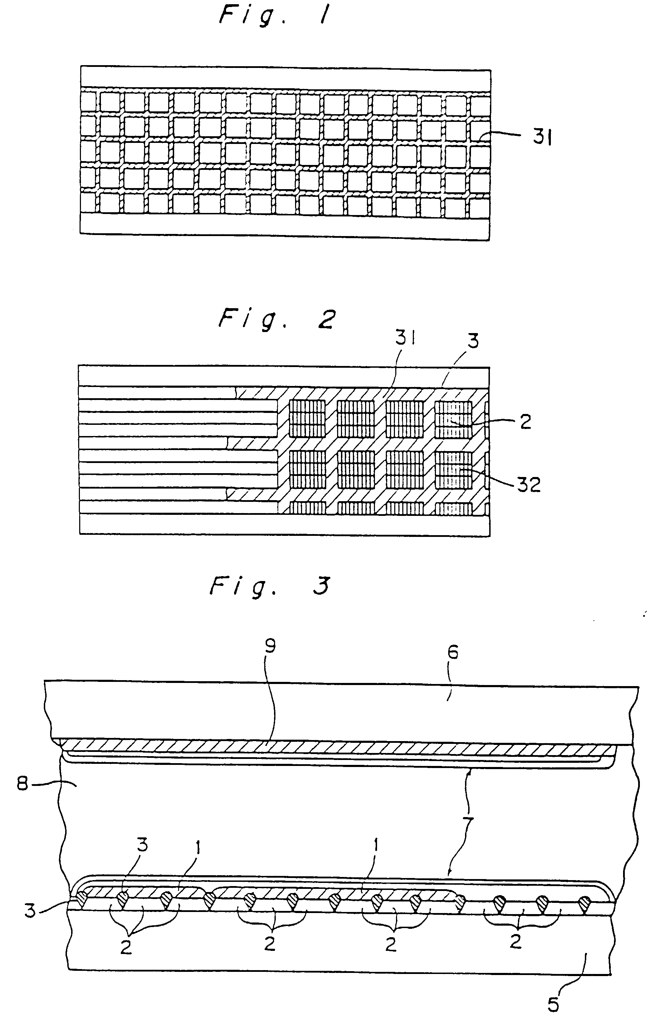

A plan view of an embodiment which is not provided with color filters is shown in Fig. 1. This embodiment is different from the previous embodiment in that the color filters 2 in the previous embodiment are not provided, and the stripe masks 3 are composed of width-thick masks 31 provided longitudinally and latitudinally, having constant width and pitch, without having width-narrow masks 32 provided longitudinally and latitudinally among the color filters 2. Only the points different from those in the previous embodiment have been described.

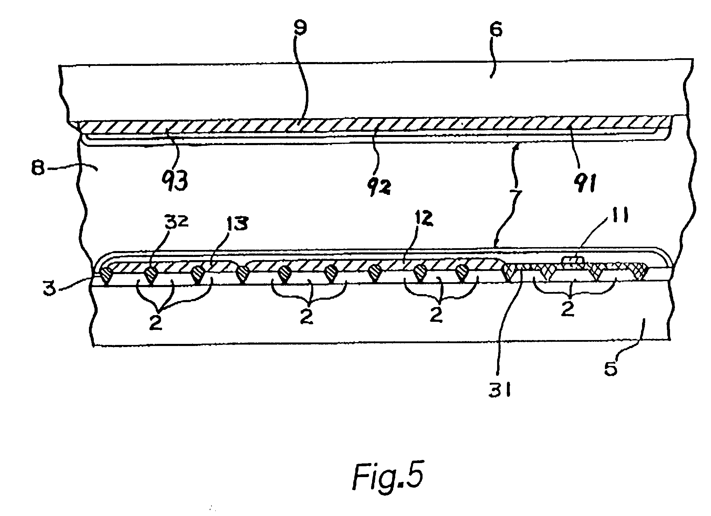

Fig. 5 is a section through a color display of one embodiment of this invention. The device has three types of area, display areas through which light is either transmitted or blocked in accordance with electrical signals to provide a desired display pattern, background areas through which light is permanently either transmitted or blocked in accordance with the desired background color of the device for providing the background of the display, and light shielded areas at which points no light is transmitted through the device.

The liquid crystal display device comprises a transparent base plate 5, a layer including a plurality of color filters 2 interspersed with width-narrow masks 32, a layer including transparent display electrodes 12 defining display areas, transparent background electrodes 13 defining background areas and width-thick masks 31 covering a plurality of color filters 2 for blocking light transmission through the device at all times. Transparent electrodes 11 carrying signals to the display electrodes are located above the width-thick masks 31.

A liquid crystal layer 8 is disposed on the electrode layer, and an orientation film 7 is provided between the liquid crystal layer 8 and the electrode layer. A common electrode 9 is provided on the opposite side of the liquid crystal layer 8. A second orientation film 7 is disposed between the liquid crystal layer 8 and the common electrode 9. The common electrode 9 is disposed on a second transparent base plate 6. Although the common electrode 9 is a single electrode it has regions 91, 92, 93 that correspond respectively to background electrodes 13, display electrodes 12 and width-thick masks 31.

The width-narrow masks 32 are positioned between adjacent color filters 2. The width-thick masks 31 covering a number of color filters 2 are provided at regular intervals. The shielded transparent electrodes 11 provide electrical signals to the display electrodes 12. This ensures that there is no transmission of light through the device at all times at the shielded areas and consequently no flicker results from differences in the signals along the transparent electrodes 11 as a result of different states of the display areas.

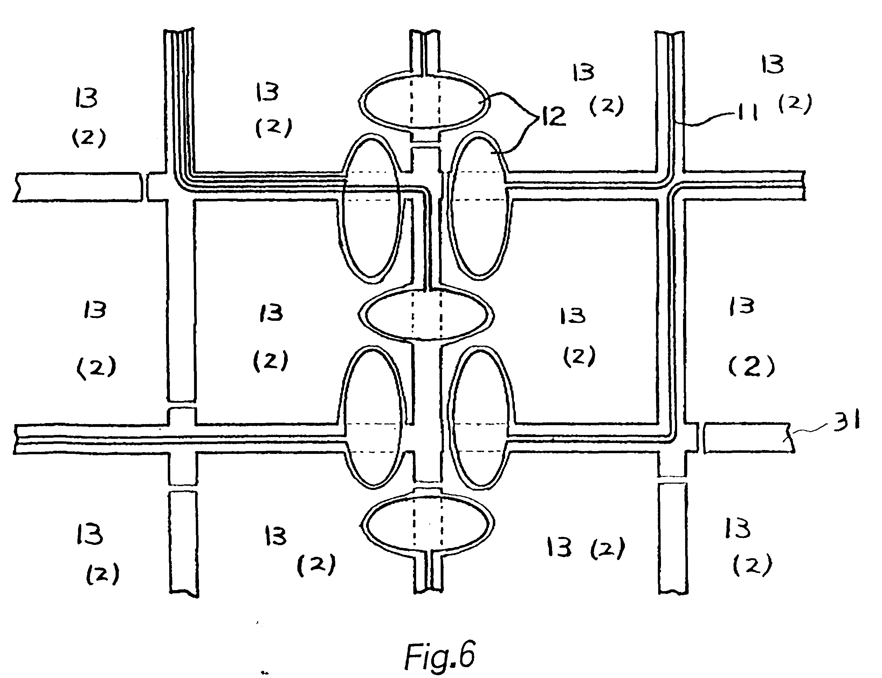

Fig. 6 is a plan view of the display device of this embodiment. One arrangement of background electrodes 13 and display electrodes 12 can clearly be seen. It is also clear that the width-thick masks 31 coincide with transparent electrodes 11 to ensure that no light is transmitted by the device at these regions. All the background electrodes 13 are interconnected to ensure a background display of uniform color throughout the display.

As in the embodiment of Fig. 1, the present invention can be applied even to the liquid crystal display device which is not provided with color filters.

According to the above-described arrangement, the non-opposite portion 11, not opposite to the transparent conductive membrane 9 provided on the substrate 6, of the transparent conductive membrane provided on the substrate 5 is overlapped on the light shielding member 31 so as not to protrude therefrom, so that normally white display of the liquid crystal layer opposite to the non-opposite portion is covered by the light shielding member in the case of the normally white construction. Therefore, the patterns for background use surrounding the display pattern by the opposite portion are provided to put the patterns for the background use normally in ON condition, so that the background of the display patterns can be made blackish. In the case of the normally black construction, the normally black display of the liquid crystal layer opposite to the non-opposite portion is covered by the light shielding member 31. The patterns for background use surrounding the display pattern by the opposite portion are provided so as to put the background patterns normally in ON condition, so that the background of the display patterns can be made whitish except for the portion of the light shielding members. The light shielding members are longitudinally and latitudinally provided with constant width and pitch on the whole face of the side adjacent to the liquid crystal layer of the substrate 5, so that the existence of the light shielding members with respect to the white background is not conspicuous. In the case of the normally white display with the contrast of the display pattern being high, it is possible to make the background of the display patterns blackish. It is possible to make the background of the display pattern whitish in the case of the normally black display with the visually recognizable angle of viewing of the display patterns being wide, thus realizing a liquid crystal display device wider in the application range. A plurality of stripe shaped color filters which are different in color and uniform in pitch may be provided on the substrate 5 having the light shielding member. The light shielding member is composed of width-narrow masks 32 provided longitudinally and latitudinally between the adjacent color filters, having the pitch the same as that of the color filters, and width-thick masks 31 provided longitudinally and latitudinally, having a width an integral multiple of the pitch of the color filters and a width larger than the minimum value of the width of the non-opposite portion of the transparent conductive membrane 9, so that the color display may be effected.

By providing a regular grid of light shielding members that prevent light from passing through the liquid crystal layer, and shield transparent feed lines, a regular grid is superimposed upon areas of the liquid crystal display exhibiting one display type (i.e. ON or OFF). As the grid lines are regular, and thin relative to the display areas of the given type, these are inconspicuous to the viewer.

## Claims

1. A liquid crystal display device comprising a pair of substrates (5,6) sandwiching a liquid crystal layer (8), one (6) of the substrates having a common electrode (9), and the other (5) of the substrates having a light shielding member (31) of a regular lattice pattern extending over the whole display area of the device, said other substrate (5) further having display electrodes (12) and background electrodes (13), wherein the display electrodes (12) are connected to signal electrodes (11) disposed on and shielded by the light shielding member (31).

2. A liquid crystal display device according to claim 1, wherein an array of color filter stripes (2) of more than one color is provided on said one substrate (5) extending over the whole display area of the device, the stripes of the array having a uniform pitch, the width and the pitch of the light shielding member (31) each being a respective integral multiple of the pitch of the color filter stripes.

3. A liquid crystal display device according to claim 2, wherein the light shielding member (31) provides light shielding masks (32) between adjacent ones of the color filter stripes (2).

4. A liquid crystal display device according to any of claims 1 to 3, wherein the background electrodes (13) are interconnected and commonly driven to change the normal light transmission state of the device and thereby provide a uniform background display.

5. A liquid crystal display device according any of claims 1 to 4, the device being of normally white type.

6. A liquid crystal display device according to any of claims 1 to 4, the device being of normally black type.

## Patentansprüche

1. Flüssigkristallanzeigevorrichtung mit einem Paar Substrate (5, 6), die eine Flüssigkristallschicht (8) einbetten, wobei eines (6) der Substrate eine gemeinsame Elektrode (9) aufweist und das andere (5) der Substrate ein Lichtabschirmungselement (31) mit einem regelmäßigen Gittermuster aufweist, das sich über die gesamte Anzeigefläche der Vorrichtung erstreckt, wobei dieses andere Substrat (5) ferner Anzeigeelektroden (12) und Hintergrundelektroden (13) aufweist, wobei die Anzeigeelektroden (12) mit Signalelektroden (11) verbunden sind, die auf dem Lichtabschirmungselement (31) angeordnet sind und durch dieses abgeschirmt werden.

2. Flüssigkristallanzeigevorrichtung nach Anspruch 1, bei dem ein Array aus Farbfilterstreifen (2) von mehr als einer Farbe auf dem einen Substrat (5) vorhanden ist, wobei sie sich über die gesamte Anzeigefläche der Vorrichtung erstrecken und diese Streifen des Arrays eine gleichmäßige Schrittweite aufweisen, wobei die Breite und die Schrittweite des Lichtabschirmungselements (31) jeweils ein ganzzahliges Vielfaches der Schrittweite der Farbfilterstreifen ist.

3. Flüssigkristallanzeigevorrichtung nach Anspruch 2, bei der das Lichtabschirmungselement (31) Lichtabschirmungsmasken (32) zwischen benachbarten Farbfilterstreifen (2) bildet.

4. Flüssigkristallanzeigevorrichtung nach einem der Ansprüche 1 bis 3, bei der die Hintergrundelektroden (13) miteinander verbunden sind und gemeinsam angesteuert werden, um den normalen Lichttransmissionszustand der Vorrichtung zu ändern und um dadurch für eine gleichmäßige Hintergrundanzeige zu sorgen.

5. Flüssigkristallanzeigevorrichtung nach einem der Ansprüche 1 bis 4, die vom im Normalzustand hellen Typ ist.

6. Flüssigkristallanzeigevorrichtung nach einem der Ansprüche 1 bis 4, die vom im Normalzustand dunklen Typ ist.

## Revendications

1. Dispositif d'affichage à cristal liquide comprenant un couple de substrats (5,6) enserrant une couche de cristal liquide (8), l'un (6) des substrats possédant une électrode commune (9), et l'autre (5) des substrats comportant un élément formant écran à la lumière 31) possédant une configuration de réseau régulier et s'étendant sur l'ensemble de la zone d'affichage du dispositif, ledit substrat comportant en outre des électrodes d'affichage (12) et des électrodes de fond (13), les électrodes d'affichage (12) étant connectées à des électrodes (11) de transmission de signaux, disposées et sur et protégées par l'élément formant écran à la lumière (31).

2. Dispositif d'affichage à cristal liquide selon la revendication 1, dans lequel un réseau de bandes formant filtres colorés (2) possédant plus d'une couleur est prévu sur ledit substrat (5) de manière à s'étendre sur l'ensemble de la zone d'affichage du dispositif, les bandes du réseau ayant un pas uniforme, la largeur et le pas de l'élément formant écran à la lumière (31) étant chacun un multiple entier du pas des bandes formant filtres colorés.

3. Dispositif d'affichage à cristal liquide selon la revendication 2, dans lequel l'élément formant écran à la lumière (31) fournit des masques formant écran à la lumière (32) entre des bandes adjacentes parmi les bandes formant filtres colorés (2).

4. Dispositif d'affichage à cristal liquide selon l'une quelconque des revendications 1 à 3, dans lequel les électrodes de fond (13) sont interconnectées et commandées en commun de manière à modifier l'état normal de transmission de la lumière du dispositif et fournir de ce fait un affichage de fond uniforme.

5. Dispositif d'affichage à cristal liquide selon l'une quelconque des revendications 1 à 4, le dispositif étant d'un type normalement blanc.

6. Dispositif d'affichage à cristal liquide selon l'une quelconque des revendications 1 à 4, le dispositif étant d'un type normalement noir.
